# EUROPEAN PATENT APPLICATION

(11) **EP 2 369 533 A1**
(43) Date of publication of application: **28.09.2011**
(21) Application number: 11156708.7
(22) Date of filing: 03.03.2011
(51) Int. Cl.: G06Q 10/00, G06F 17/30, H04M 1/725

(54) **Method, system, computer-readable medium and mobile device for managing messages**

(30) Priority: 03.03.2010 US 310247 P; 15.04.2010 US 324303 P; 02.03.2011 US 38394
(71) Applicant: HTC Corporation, Taoyuan County 330 (TW)
(72) Inventor: Lee, Po-Yen, Taoyuan City, Taoyuan County 330 (TW); Chen Chien-Wen, Taoyuan City, Taoyuan County 330 (TW); Yeh Pai-Chang, Taoyuan City, Taoyuan County 330 (TW); Lian, Li-Wen, Taoyuan City, Taoyuan County 330 (TW)
(74) Representative: 2K Patentanwälte Blasberg Kewitz & Reichel

(57) **Abstract**

A method, a system, and a mobile device for managing messages and a computer-readable medium using the method are provided. In the present invention, the messages received by the mobile device are uploaded to a network server. Besides, the messages to be retained in the mobile device are determined according to a retention rule, and the messages not satisfying the retention rule are deleted from the mobile device.

## Description

### BACKGROUND OF THE INVENTION

### 1. Field of the Invention

The invention generally relates to a message management mechanism, and more particularly, to a message management method and a message management system for backing up messages in a mobile device to the cloud.

### 2. Description of Related Art

Different types of small-sized and highly portable mobile devices have been developed in order to meet today's busy lifestyle. For example, mobile phones and personal digital assistant (PDA) phones allow people to contact each other anytime and anywhere and have become the most indispensable tools to modem people.

Generally, a mobile device can transmit user information (for example, text, music, or pictures) to a remote device through short message service (SMS) messages or multimedia messaging service (MMS) messages, so as to share such information with remote users.

However, because a mobile device can only store a limited number of messages or has only a limited storage space, when a user receives or transmits a large number of messages, the messages may reach the limited number or takes up the entire storage space.

### SUMMARY OF THE INVENTION

Accordingly, the invention is directed to a message management method for managing a message number in a mobile device.

The invention is directed to a message management system for uploading messages in a mobile device to a network server to back up the messages.

The invention provides a message management method adaptable to a mobile device. In the message management method, a plurality of messages received by the mobile device is uploaded to a network server. Besides, whether each of the messages is retained in the mobile device is determined according to a retention rule, and the messages not satisfying the retention rule are deleted from the mobile device.

The invention provides a message management system comprising a mobile device and a network server. The mobile device uploads received messages to the network server, sets up a retention rule to determine the messages to be retained in the mobile device, and deletes the messages not satisfying the retention rule from the mobile device.

According to an embodiment of the invention, the retention rule comprises at least one of a message number limit and a receiving time limit. The message number limit is used for limiting the number of messages to be retained in the mobile device, and the receiving time limit is used for limiting that only messages received within a time section are retained in the mobile device.

According to an embodiment of the invention, when a new message is received, the mobile device determines whether the number of messages stored therein reaches the message number limit. If the number of messages stored in the mobile device reaches the message number limit, the new message is retained, and the oldest message among the messages is deleted.

According to an embodiment of the invention, the mobile device uploads the messages received during a predetermined time period to the network server after each interval of the predetermined time period. In another embodiment, the mobile device uploads the received messages to the network server when it receives a user operation. In still another embodiment, when the mobile device receives a new message, the mobile device uploads a previously received message to the network server. In addition, the mobile device may also download messages satisfying the retention rule from the network server.

According to an embodiment of the invention, the message management system further comprises a computer device. The computer device comprises a browser. The computer device connects to the network server with the browser to display a user interface and displays the messages stored in the network server in the user interface. Besides, the computer device edits the messages stored in the network server through the user interface. The user interface is configured to display a message list. The message list comprises a plurality of display fields, each of the display fields is corresponding to a contact information, and the messages are categorized according to the contact information. When one of the display fields is selected, the user interface displays a message thread of the contact information corresponding to the selected display field. Besides, the user interface further provides a contact edit function to edit the contact information.

According to an embodiment of the invention, the mobile device comprises a communication unit, a storage unit, and an operation unit. The communication unit receives the messages and uploads the messages to the network server. The storage unit stores the messages. The operation unit determines the messages to be retained in the storage unit according to the retention rule and deletes the messages not satisfying the retention rule from the storage unit.

The invention provides a mobile device comprising a communication unit, a storage unit, and an operation unit. The communication unit receives a message and uploads the message to a network server. The storage unit stores the message. The operation unit determines the messages to be retained in the storage unit according to a retention rule and deletes the messages not satisfying the retention rule from the storage unit.

The invention provides a computer-readable medium storing a plurality of program instructions for being loaded into a mobile device to execute the message management method described above. The computer-readable medium is composed of a plurality of code snippets (for example, an organization chart establishment code snippet, a form approval code snippet, a settings code snippet, and a deployment code snippet). The code snippets are suitable for being loaded into an electronic device and executed by the same to accomplish the steps of the message management method and the message management function described above.

As described, in the invention, all the messages in a mobile device are uploaded to a network server to be backed up, and only some of the messages are retained in the mobile device, so that the number of messages stored in the mobile device is controlled or less storage space of the mobile device is used.

These and other exemplary embodiments, features, aspects, and advantages of the invention will be described and become more apparent from the detailed description of exemplary embodiments when read in conjunction with accompanying drawings.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a diagram of a message management system according to a first embodiment of the invention.

FIG. 2 is a flowchart of a message management method according to the first embodiment of the invention.

FIG. 3 is a block diagram of a mobile device according to the first embodiment of the invention.

FIG. 4 is a diagram of a message management system according to a second embodiment of the invention.

FIGs. 5A-5E are diagrams of a user interface according to the second embodiment of the invention.

### DESCRIPTION OF THE EMBODIMENTS

Reference will now be made in detail to the present embodiments of the invention, examples of which are illustrated in the accompanying drawings. Wherever possible, the same reference numbers are used in the drawings and the description to refer to the same or like parts.

A mobile device usually stores only a limited number of messages and, to achieve a small and slim appearance, has a limited storage space for storing messages. In order to control the number of messages stored in a mobile device or the storage space taken by the received and transmitted messages, the invention provides a message management method, a message management system, and a computer-readable medium using the message management method, wherein messages in the mobile device are uploaded into a network server and only part of the messages are retained in the mobile device. Below, embodiments of the invention will be described in detail with reference to accompanying drawings.

### First Embodiment

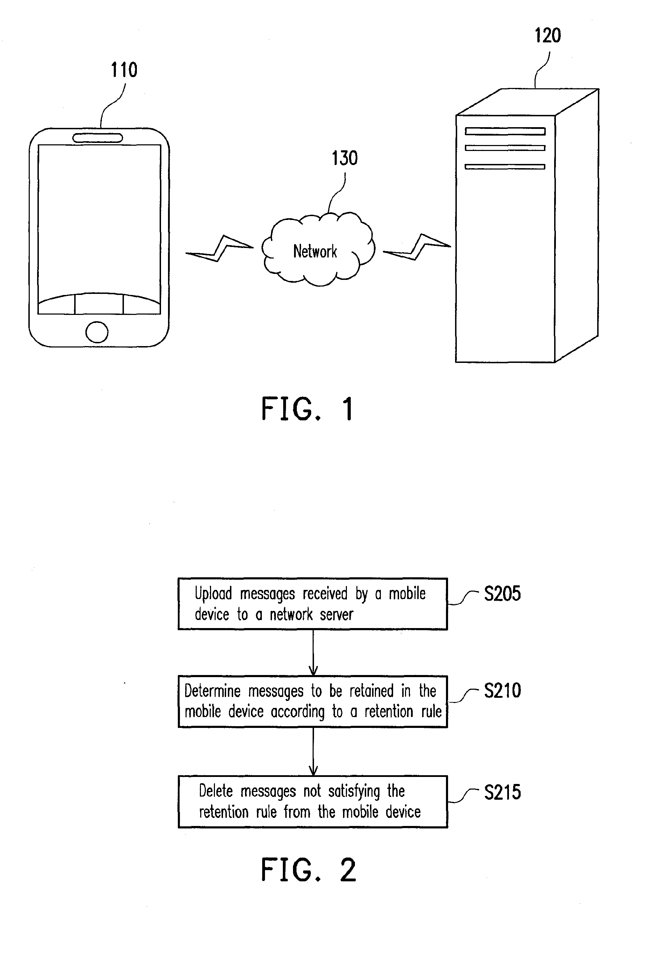

FIG. 1 is a diagram of a message management system according to the first embodiment of the invention. Referring to FIG. 1, in the present embodiment, the message management system comprises a mobile device 110 and a network server 120. The mobile device 110 communicates with the network server 120 through a network 130.

The mobile device 110 may be a mobile phone with a network connection function, and which can upload all the messages it receives to the network server 120 to back up these messages. The messages received by the mobile device 110 comprise short message service (SMS) messages and multimedia messaging service (MMS) messages. Besides, the mobile device 110 can determine which messages are retained in the mobile device 110 according to a retention rule and delete messages in the mobile device 110 that do not satisfy the retention rule. Herein the retention rule is used for limiting the number of messages to be retained in the mobile device 110.

Additionally, the mobile device 110 may also transmit messages to other mobile devices, and these messages transmitted by the mobile device 110 may also be uploaded to the network server 120 through the network 130 to be backed up. Moreover, the mobile device 110 may also determine the received messages and the transmitted messages to be retained in the mobile device 110 according to the retention rule and delete the messages not satisfying the retention rule.

Below, various steps of the message management method will be described in detail with reference to foregoing message management system 100. FIG. 2 is a flowchart of the message management method according to the first embodiment of the invention. Referring to both FIG. 1 and FIG. 2, in step S205, the mobile device 110 uploads a plurality of received messages to the network server 120. Furthermore, the mobile device 110 may also upload the messages it transmits or responds to the network server 120. The mobile device 110 may upload messages received (or transmitted) during a predetermined time period to the network server 120 after each interval of the predetermined time period. Or, the mobile device 110 may upload the received messages to the network server 120 when it receives a user operation. Or, the mobile device 110 may also upload a previously received message to the network server 120 when it receives a new message.

After browsing a message, a user usually determines whether to retain this message. If this message is a junk message or an unimportant message, the user usually deletes the message right away. Thus, the mobile device 110 may also be configured to upload a previously received message to the network server 120 when a new message (not viewed yet) is received, so that any junk message can be prevented from being uploaded to the network server 120. Additionally, the network server 120 may be further configured to upload only messages that have been viewed to the network server 120.

Then, in step S210, the mobile device 110 determines the messages to be retained according to a retention rule. The retention rule comprises at least one of a message number limit and a receiving time limit. The message number limit is used for limiting the number of messages to be retained in the mobile device 110. For example, it may be configured that 30 messages are retained in the mobile device 110. The receiving time limit is used for limiting that messages received within a time section are retained in the mobile device 110. For example, it may be configured that messages received during the last 30 days are retained in the mobile device 110.

Next, in step S215, the messages that do not satisfy the retention rule are deleted from the mobile device 110. Namely, only messages satisfying the retention rule are stored in the mobile device 110 so that less storage space of the mobile device 110 is used. On the other hand, all messages received by the mobile device 110 are stored in the network server 120, and all messages transmitted by the mobile device 110 may also be stored in the network server 120.

Below, the retention rule will be further explained with examples. Assuming that a user sets the retention rule to be the message number limit, when the mobile device 110 receives a new message, it determines whether the number of messages stored in the mobile device 110 reaches the message number limit. If the number of messages reaches the message number limit, the mobile device 110 retains the new message and deletes an oldest message among all the messages. For example, assuming the message number limit to be 30, when the mobile device 110 receives a 31^{st} message, it deletes the 1^{st} message. Accordingly, the number of messages retained in the mobile device 110 remains at 30.

In addition, assuming that the user sets the retention rule to be the receiving time limit (for example, sets the time section of the receiving time limit to be last 30 days), the mobile device 110 can be further configured to check each message stored therein every day to determine whether there is any message received 30 days ago and delete any message that is received 30 days ago. Accordingly, the messages retained in the mobile device 110 are all received within last 30 days.

Moreover, foregoing time section may also be set as a specific time section, for example January to February of last year. After the retention rule is updated, the mobile device 110 may also download messages satisfying the retention rule from the network server 120. For example, assuming that 50 messages are received from last January to last February, if the retention rule of the mobile device 110 is originally set to the message number limit, after updating the setting of the time section, the mobile device 110 downloads 50 messages received during last January and February from the network server 120 to the mobile device 110 and deletes the 30 messages originally stored in the mobile device 110 (assuming the 30 messages are not received during aforementioned time section). Herein it should be noted that the 30 messages have been uploaded to the network server 120.

Thereby, all the messages received by the mobile device 110 are uploaded to the network server 120, and only messages satisfying the retention rule are stored in the mobile device 110, so that the number of messages in the mobile device 110 won't exceed its upper limit or the storage space of the mobile device 110 won't be taken up by the messages. In addition, all the messages received by the mobile device 110 are uploaded to the network server 120. Through the setting of the retention rule, the user can conveniently search for messages received by the mobile device 110 during a specific time section.

Additionally, the mobile device 110 may determine whether both received and transmitted messages satisfy the retention rule. For example, the mobile device 110 uploads all the messages it receives and transmits to the network server 120. Besides, the mobile device 110 may determine whether the total number of transmitted and received messages reaches the message number limit and delete the oldest messages over the message number limit. Or, the mobile device 110 may also delete the messages transmitted or received out of the time section specified in the retention rule.

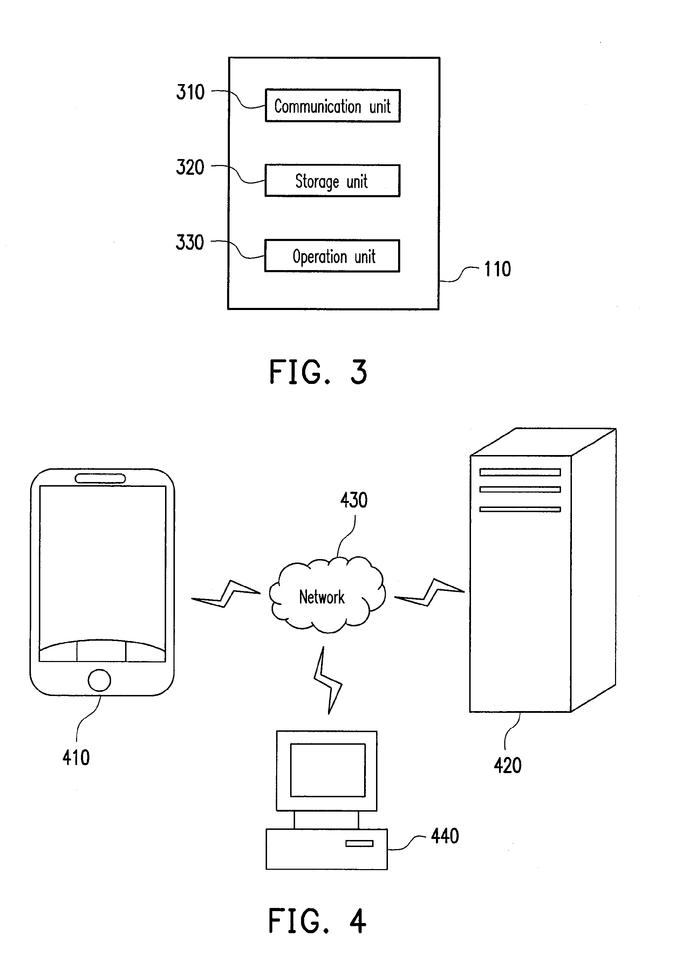

Below, various components of the mobile device 110 will be explained with reference to another embodiment. FIG. 3 is a block diagram of a mobile device according to the first embodiment of the invention. Referring to FIG. 1 and FIG. 3, the mobile device 110 comprises a communication unit 310, a storage unit 320, and an operation unit 330.

The communication unit 310 receives messages and uploads the messages to the network server 120. The communication unit 310 may upload messages received during a predetermined time period (for example, 5 minutes) to the network server 120 after each interval of the predetermined time period. Or, the communication unit 310 may upload the messages to the network server 120 when a user operation is received. Or, the communication unit 310 may also upload a previously received message to the network server 120 when it receives a new message.

In the present embodiment, the communication unit 310 may be the combination of an antenna and a radio frequency (RF) chip for uploading messages to the network server 120. For example, the communication unit 310 may connect to the network 130 through a wireless network (for example, WiFi or WiMAX) or a 2.5G, 3G, or 3.5G mobile communication network. Accordingly, the mobile device 300 may upload the messages it receives to the network server 120. In addition, the communication unit 310 may also be configured to download messages from the network server 120.

The storage unit 320 stores messages received by the communication unit 310. The operation unit 330 determines the messages to be retained in the mobile device according to a retention rule and deletes the messages that do not satisfy the retention rule from the storage unit 320. The retention rule is the same as that described in the first embodiment therefore will not be described herein.

When the communication unit 310 receives a new message, the operation unit 330 determines whether the number of messages in the storage unit 320 reaches the message number limit specified in the retention rule. If the number of messages in the storage unit 320 reaches the message number limit, the operation unit 330 stores the new message into the storage unit 320 and deletes the oldest message from the storage unit 320.

### Second Embodiment

FIG. 4 is a diagram of a message management system according to the second embodiment of the invention. Referring to FIG. 4, the message management system in the present embodiment comprises a mobile device 410, a network server 420, and a computer device 440. The mobile device 410 and the computer device 440 respectively communicate with the network server 420 through a network 430. The mobile device 410 has the same or similar function as the mobile device 110 in the first embodiment therefore will not be described herein. In addition, the communication between the mobile device 410 and the network server 420 is the same as or similar to that between the mobile device 110 and the network server 120 in the first embodiment therefore will not be described herein either. The difference between the present embodiment and the first embodiment is that the message management system in the present embodiment further manages messages stored in the network server 420 by using the computer device 440.

The computer device 440 comprises a browser. The computer device 440 connects to the network server 420 through the browser to display a user interface and displays messages stored in the network server 420 in the user interface. Besides, the computer device 440 edits the messages stored in the network server 420 through the user interface. Namely, a user can upload all the messages in the mobile device 410 to the network server 420 and then connect to the network server 420 through the computer device 440 to edit these messages.

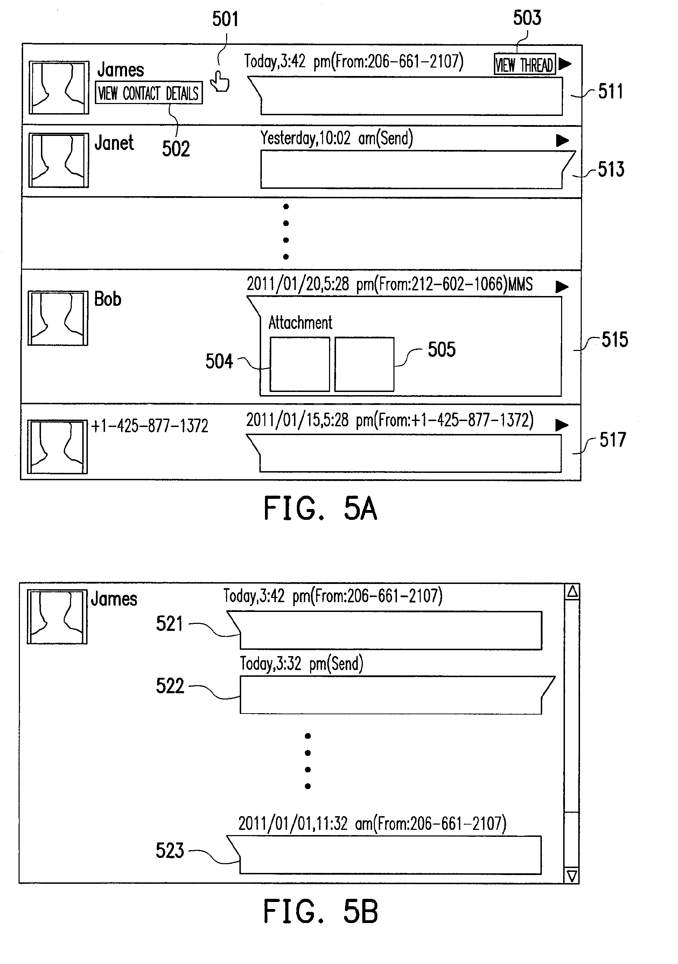

FIGs. 5A-5E are diagrams of a user interface according to the second embodiment of the invention. In the present embodiment, a message list is displayed in FIG. 5A. The message list comprises display fields 511-517, and each of the display fields is corresponding to a contact. The user interface categorizes the messages stored by the mobile device 410 in the network server 420 according to the contacts. Herein each display field comprises a contact photo, a contact name, the most recent message transmitted to (or received from) the contact, and the time for transmitting (or receiving) the message. When the user selects one of the display fields, the background color of the selected display field changes. For example, the background color of an unselected display field is white, while the background color of a selected display field changes to grey.

For example, in the display field 511, the name of the contact is "James", and the most recent message with this contact is received from the phone number "206-661-2107" of the contact "James" at 3:42pm today. When the user moves the cursor 501 to the display field 511, the background color of the display field 511 changes and a selection item 502 and a selection item 503 are displayed in the display field 511. The user can view the contact details by clicking at the selection item 502 and can view all messages with the contact "James" by clicking at the selection item 503 (as shown in FIG. 5B). FIG. 5B shows a page of message threads transmitted to and received from the same contact. The message thread page shows all the messages between the mobile device 410 and the contact "James". For example, the mobile device 410 sends a message to the contact "James" at 3:32pm today and receives another message from the phone number "206-661-2107" of the contact "James" at 3:42pm today. Herein the message display box 521 and 523 for presenting received messages are different from the message display box 522 for presenting sent messages. For example, the appearances and/or colors of these message display boxes are different.

Referring to FIG. 5A, regarding the display field 513, the contact name thereof is "Janet", and the most recent message with this contact is sent by the mobile device 410 to the "Janet" at 10:02am yesterday.

Regarding the display field 515, the contact name thereof is "Bob", and the most recent message with this contact is received from the phone number "212-602-1066" of the contact "Bob" at 5:28pm on 2011/01/20, wherein the message is a MMS message. Because the attachment of this MMS message is a picture, a thumbnail of the picture is displayed in the message list in FIG. 5A as a preview image. If the attachment contains two or more pictures, the thumbnails 504 and 505 of the pictures may be displayed together as a preview image. When the user clicks at a thumbnail, the browser downloads the entire picture from the network server 420. In addition, if the attachment of the MMS message is another file type, the name and/or icon of the attachment may be displayed in the message list, and the complete file may be downloaded by clicking at the name or icon of the attachment.

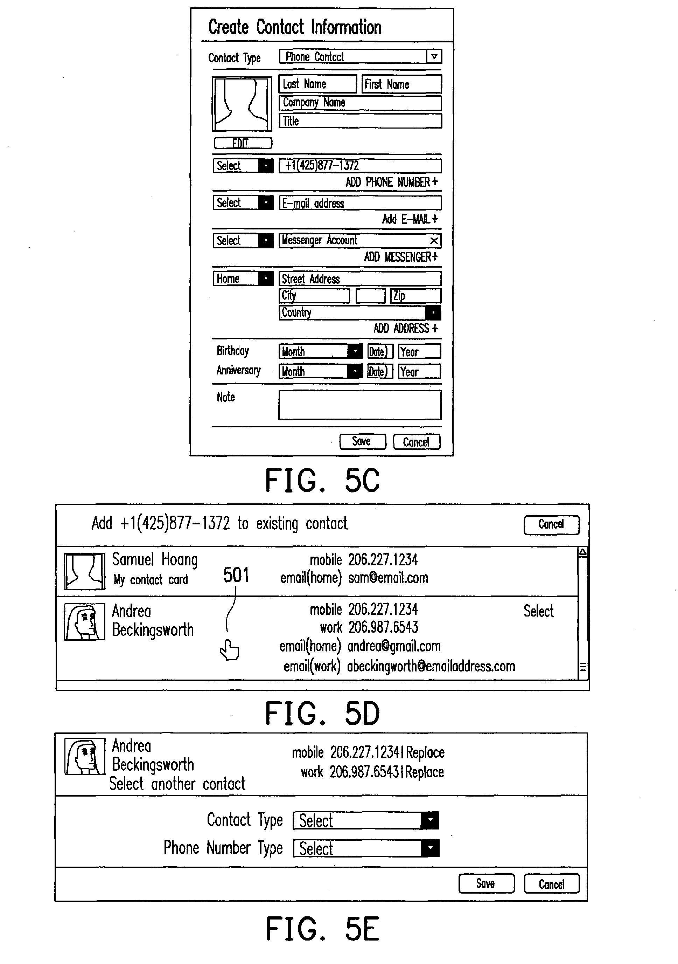

If the phone number from which a message is received does not exist in the contact list, the phone number is directly displayed, as the display field 517 in FIG. 5A. In the display field 517, the contact name is not displayed because the phone number "+1-425-877-1372" does not exist in the contact list. In this case, the phone number may be added in the computer device 440 through the user interface. There may be two ways to add this phone number. One way is to create a new contact information directly, and the other way is to add the phone number into existing contact information. If the user selects to create a new contact information, the user interface displays a page as shown in FIG. 5C to allow the user to create the contact information. If the user selects to add the phone number into existing contact information, the user interface displays a contact list as shown in FIG. 5D to allow the user to select one of the contacts. After the desired contact is selected, the user interface displays an edit page as shown in FIG. 5E to allow the user to add the phone number into the contact information.

The invention further provides a computer-readable medium. The computer-readable medium contains program instructions for being loaded into a mobile device to execute the message management method described above. The computer-readable medium is composed of a plurality of code snippets (for example, an organization chart establishment code snippet, a form approval code snippet, a settings code snippet, and a deployment code snippet). The steps of the message management method and the functions of the message management system described above can be accomplished when the code snippets are loaded into a mobile device and executed by the same.

In summary, according to the invention, all the messages in a mobile device are uploaded to a network server to be backed up, and only some of the messages are retained in the mobile device, so that the number of messages in the mobile device is controlled and less storage space of the mobile device is used. Additionally, because the messages transmitted and received by the mobile device have been uploaded to the network server, if the user changes a mobile device, all previously received messages may be conveniently downloaded into the new mobile device. Moreover, messages stored by the mobile device in the network server may be edited through a computer device.

It will be apparent to those skilled in the art that various modifications and variations can be made to the structure of the invention without departing from the scope or spirit of the invention. In view of the foregoing, it is intended that the invention cover modifications and variations of this invention provided they fall within the scope of the following claims and their equivalents.

## Claims

1. A message management method, adaptable to a mobile device (110, 410), the message management method comprising:
uploading (S205) a plurality of messages received by the mobile device to a network server (120, 420);
determining (S210) the messages to be retained in the mobile device according to a retention rule; and
deleting the (S215) messages not satisfying the retention rule from the mobile device (110, 410).

2. The method according to claim 1, wherein the retention rule comprises a message number limit, and the message number limit is used for limiting a number of the messages to be retained in the mobile device (110, 410).

3. The method according to claim 2 further comprising:
when a new message is received, determining whether a number of the messages in the mobile device (110, 410) reaches the message number limit; and
when the number of the messages in the mobile device (110, 410) reaches the message number limit, retaining the new message and deleting an oldest message among the messages.

4. The method according to any one of claims 1 to 3, wherein the retention rule comprises a receiving time limit, and the receiving time limit is used for limiting that only the messages received within a time section are retained in the mobile device (110,410).

5. The method according to any one of claims 1 to 4, wherein the step of uploading the messages received by the mobile device (110, 410) to the network server (120, 420) comprises:
when a new message is received, uploading a previously received message to the network server (120, 420).

6. The method according to any one of claims 1 to 5, wherein the step of determining the messages to be retained in the mobile device (110, 410) according to the retention rule further comprises:
downloading messages satisfying the retention rule from the network server (110,410).

7. A computer-readable medium, storing a plurality of program instructions for being loaded into a mobile device to execute the message management method according to any one of claims 1 to 6.

8. A message management system, comprising:
a network server (120, 420); and
a mobile device (110, 410), for uploading received messages to the network server (120, 420), setting up a retention rule to determine the messages to be retained in the mobile device (110, 410), and deleting the messages not satisfying the retention rule from the mobile device (110, 410).

9. The system according to claim 8, wherein the retention rule comprises a message number limit, and the message number limit is used for limiting a number of messages to be retained in the mobile device, wherein when the mobile device (110, 410) receives a new message, the mobile device (110, 410) determines whether a number of the messages in the mobile device (110, 410) reaches the message number limit, and when the number of the messages in the mobile device (110, 410) reaches the message number limit, the mobile (110, 410) device retains the new message and deletes an oldest message among the messages.

10. The system according to claim 8 or 9, wherein the retention rule comprises a receiving time limit, and the receiving time limit is used for limiting that only messages received within a time section are retained in the mobile device (110, 410).

11. The system according to claim any one of claims 8 to 10, wherein when the mobile device (110, 410) receives a new message, the mobile device (110, 410) uploads a previously received message to the network server (120, 420).

12. The system according to any one of claims 8 to 11, wherein the mobile device further downloads messages satisfying the retention rule from the network server (120,420).

13. The system according to any one of claims 8 to 12 further comprising:
a computer device (440), comprising a browser, for connecting to the network server (120, 420) through the browser to display a user interface, displaying the messages stored in the network server (120, 420) in the user interface, and editing the messages stored in the network server (120, 420) through the user interface.

14. The system according to claim 13, wherein the user interface displays a message list, the message list comprises a plurality of display fields, each of the display fields is corresponding to a contact information, and the messages are categorized according to the contact information, wherein when one of the display fields is selected, the user interface displays a message thread of the contact information corresponding to the selected display field, and the user interface provides a contact edit function to edit the contact information.

15. A mobile device (110, 410), comprising:
a communication unit (310), for receiving a message and uploading the message to a network server (120, 420);
a storage unit (320), for storing the message; and
an operation unit (330), for determining messages to be retained in the storage unit (320) according to a retention rule and deleting messages not satisfying the retention rule from the storage unit (320).
